# EUROPEAN PATENT APPLICATION

(11) **EP 4 575 238 A1**
(43) Date of publication of application: **25.06.2025**
(21) Application number: 23218072.9
(22) Date of filing: 19.12.2023
(51) Int. Cl.: F16B 13/12

(54) **ANCHOR SYSTEM WITH DUMBBELL-SHAPED ANCHOR ROD**

(71) Applicant: Hilti Aktiengesellschaft, 9494 Schaan (LI)
(72) Inventor: Spampatti, Matteo, 9470 Buchs (CH); Gamache, Christopher, HIGHLAND VILLAGE, 75077 (US)
(74) Representative: Hilti Aktiengesellschaft Corporate Intellectual Property

(57) **Abstract**

Anchor system comprising a drop-in anchor and an anchor rod, which comprises an anchor rod first end, and a first external thread provided at the anchor rod first end. The drop-in anchor comprises an anchor sleeve having an expandable first end and an anchor sleeve second end, a plug that is able to be driven into an installed position within the anchor sleeve, and an internal thread for threadedly engaging the first external thread. The anchor rod further comprises an anchor rod shear absorbance region and an anchor rod yield region, which is located between the anchor rod shear absorbance region and the anchor rod first end. The anchor rod is so dimensioned that the anchor rod shear absorbance region is located within the anchor sleeve second end when installed. The anchor rod has, within the anchor rod yield region, smaller cross section than it has in the anchor rod shear absorbance region.

## Description

The invention relates to an anchor system according to the preamble of claim 1, a structure comprising such an anchor system and a method for installing such an anchor system.

An anchor system comprising a drop-in anchor is for example known form US2021062846 A1.

It is an object of the invention to provide an anchor system, a structure comprising such an anchor system and a method for installing such an anchor system, which provide particularly good load characteristics, whilst being particularly easy and economical to manufacture and to handle.

This object is achieved by an anchor system device according to claim 1, a structure comprising such an anchor system according to claim 7 and a method for installing such an anchor system according to claim 8. Dependent claims refer to preferred embodiments of the invention.

There is thus provided an anchor system, comprising a drop-in anchor and an anchor rod,
- wherein the anchor rod comprises an anchor rod first end, and a first external thread that is provided at the anchor rod first end,
- wherein the drop-in anchor comprises an anchor sleeve having an expandable first end and an anchor sleeve second end, and wherein the drop-in anchor further comprises a plug that is able to be driven into an installed position within the anchor sleeve, in which the plug expands the expandable first end, wherein the anchor sleeve further comprises an internal thread for threadedly engaging the first external thread of the anchor rod, in particular when the plug is in the installed position.
The system is characterized in that
- the anchor rod further comprises an anchor rod yield region and an anchor rod shear absorbance region, wherein the anchor rod yield region is located, preferably axially located, between the anchor rod shear absorbance region and the anchor rod first end, wherein the anchor rod, in particular the length of the anchor rod, is so dimensioned that the anchor rod shear absorbance region is located within the anchor sleeve second end when the internal thread of the anchor sleeve threadedly engages the first external thread of the anchor rod, preferably when the first external thread of the anchor rod is fully tightened within the internal thread of the anchor sleeve, wherein the anchor rod has, within the anchor rod yield region, smaller cross section than it has in the anchor rod shear absorbance region.

Accordingly, the anchor rod has two axially offset regions, namely the anchor rod shear absorbance region and the anchor rod yield region, wherein the anchor rod shear absorbance region is mechanically stronger than the anchor rod yield region. The anchor rod is so dimensioned that when installed as intended, the anchor rod shear absorbance region is (axially) abreast of the anchor sleeve second end of the anchor sleeve, which is the location where shear loads are typically expected to be high. Thus, particularly good shear characteristics can be achieved. On the other hand, the anchor rod has smaller cross section and is therefore weaker in the anchor rod yield region, which is located deeper within the anchor sleeve when the anchor rod is installed as intended. Providing a thus weaker anchor rod yield region might allow to save on material, which might be advantageous in view of manufacturing. Moreover, purposefully providing a weaker anchor rod yield region might provide a predetermined yield point, giving rise to a particularly well-defined failure mode, defined by the anchor rod. Thus, particularly well-defined load characteristics can be obtained at particularly low effort.

The anchor rod, the anchor sleeve and/or the plug preferably consist of a metal material, more preferably of steel. The anchor rod is preferably massive and/or monolithic. The anchor sleeve is preferably monolithic. In particular, the anchor sleeve has an internal taper at its expandable first end, so that the anchor sleeve can be expanded by driving the plug into the installed position within the expandable first end. The plug can preferably have a generally frustoconical lateral surface.

The expandable first end and the anchor sleeve second end, respectively, are opposite ends of the anchor sleeve. The drop-in anchor has a longitudinal axis, which extends through the expandable first end and the anchor sleeve second end. When installed as intended, the anchor rod is aligned co-axially with the longitudinal axis.

The anchor rod is so dimensioned that the anchor rod shear absorbance region is located abreast of the anchor sleeve second end of the anchor sleeve when the internal thread of the anchor sleeve threadedly engages the first external thread of the anchor rod, in particular when the first external thread of the anchor rod is fully tightened within the internal thread of the anchor sleeve.

Throughout this document - wherever the terms "axially", "longitudinally", "radially" and "circumferentially" are used, they can refer, in particular, to the longitudinal axis of the drop-in anchor, unless stated otherwise.

According to a preferred embodiment, the anchor rod has, within the anchor rod yield region, smaller cross section than it has at the anchor rod first end. Accordingly, the anchor rod has a dumbbell like appearance, with relatively large cross sections at the anchor rod first end and at the anchor rod shear absorbance region, and with a narrower region in-between, namely the anchor rod yield region. This design allows using relatively wide plugs at particularly low effort, which can be amongst others advantageous in view of performance. It is particularly preferred that the cross sections of the anchor rod within anchor rod first end and within the anchor rod shear absorbance region, respectively, are generally the same. This can further improve the performance.

Preferably, the anchor rod has, within the anchor rod yield region, generally cylindrical, in particular circular cylindrical, lateral surface. This can be advantageous in view of manufacturability and/or load bearing performance.

Advantageously, the anchor rod yield region has a length I₃₂ and a diameter d₃₂, wherein the length I₃₂ is greater or equal than eight times the diameter d₃₂., i.e. I₃₂ ≥ 8 · d₃₂. This can provide particularly reliable yield and/or breaking characteristics within the anchor rod yield region.

According to another preferred embodiment of the invention, the anchor rod has an anchor rod second end and a second external thread that is provided at the anchor rod second end. This can allow particularly easy mounting of an attachment part, e.g. by screwing a nut onto the second external thread. The anchor rod second end is located adjacent to the anchor rod shear absorbance region. The anchor rod second end and the anchor rod shear absorbance region might, preferably, have generally same diameter. However, the diameters might also differ. The second external thread may extend into the anchor rod shear absorbance region or might be distant therefrom.

Preferably, the drop-in anchor comprises an additional expansion sleeve, which can be radially expanded by a wedge, in particular a conical wedge, provided on the outside of the expansion sleeve, wherein the conical wedge is preferably located at the expandable first end of the anchor sleeve. This additional expansion sleeve can further improve performance of the anchor system, in particular in cracked concrete conditions and/or seismic conditions. The additional expansion sleeve and/or the wedge might be designed as described in US2021062846 A1, which is incorporated by reference.

The invention also relates to a structure comprising a substrate, an anchor system as described, and an attachment part, wherein the expandable first end of the anchor sleeve is embedded in the substrate, wherein the anchor sleeve projects from the substrate into the attachment part, such that the anchor sleeve second end is located within the attachment part, and wherein the anchor rod shear absorbance region extends, more preferably extends axially, both within the attachment part and within the substrate. Thus, both the anchor sleeve second end and the anchor rod shear absorbance region penetrate through the interface that is formed between the substrate and the attachment part mounted thereon, so as to be able to absorb shear that arises at that interface. A nut might be provided, which is threaded onto the second external thread, so as to secure the attachment part.

Whenever mentioned, the substrate can preferably be a concrete substrate. The attachment part might for example include a threaded sleeve for receiving a threaded rod, e.g. for direct or indirect mounting of a pipe ring.

The invention also relates to a method for installing a described anchor system, in which a bore having a bottom is provided in a substrate, and the anchor sleeve is inserted into the bore until it abuts on the bottom of the bore, wherein the bore is so dimensioned that the anchor sleeve second end projects from the substrate when the anchor sleeve abuts on the bottom of the bore. Accordingly, the anchor sleeve second ends projects from the substrate, where it can be or is inserted into the attachment part for shear transfer.

Features that are described here in connection with the anchor system can also be used in connection with the structure and/or the method, and vice versa. Features that are described here in connection with the structure system can also be used in connection with the method, and vice versa.

The invention is explained in greater detail below with reference to preferred exemplary embodiments, which are depicted schematically in the accompanying drawings. Individual features of the exemplary embodiments presented below can be implemented either individually or in any combination within the scope of the present invention.
Figure 1 is a longitudinally sectional view of a structure comprising an anchor system.

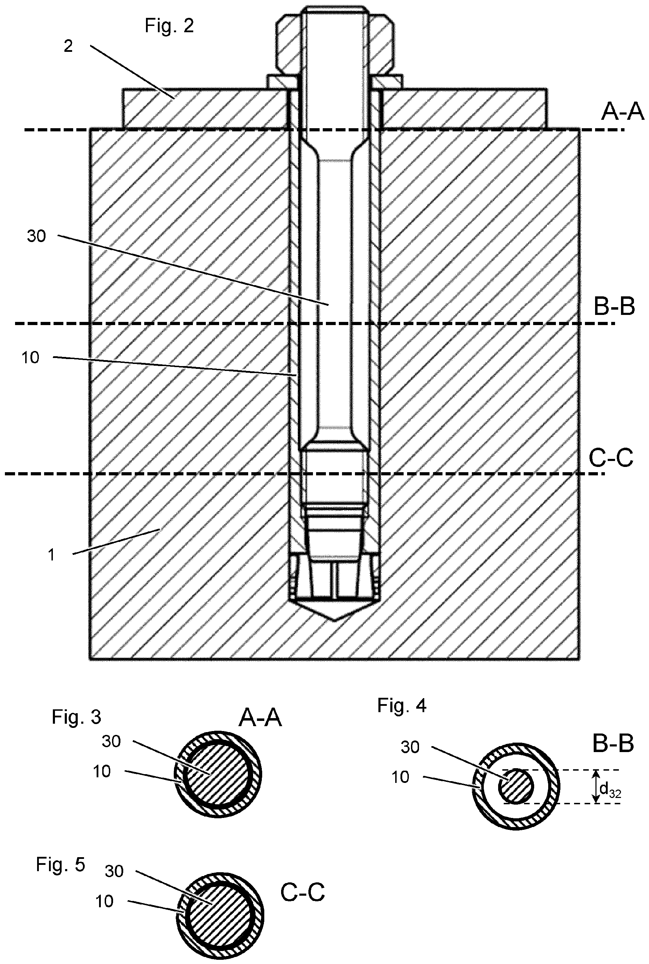

Figure 2 is the same as figure 1, but with some reference numerals omitted, for the sake of clarity, and with additional sectional planes added.
Figure 3 is a cross-sectional view, according to A-A in figure 2, of the anchor system of figures 1 and 2.
Figure 4 is a cross-sectional view, according to B-B in figure 2, of the anchor system of figures 1 and 2.
Figure 5 is a cross-sectional view, according to C-C in figure 2, of the anchor system of figures 1 and 2.

The figures show a structure comprising a substrate 1, in particular a concrete substrate, an attachment part 2, in particular a steel attachment part, and an anchor system that secures the attachment part 2 on the substrate 1.

The anchor system comprises a drop-in anchor 10 and an anchor rod 30 that is installed within the drop-in anchor 10.

The drop-in anchor 10 has a longitudinal axis 99 and comprises an anchor sleeve 15, which has an expandable first end 11 and an anchor sleeve second end 12, wherein the expandable first end 11 and the anchor sleeve second end 12 are opposite ends of the anchor sleeve 15, and wherein the longitudinal axis 99 extends through the expandable first end 11 and through the anchor sleeve second end 12. In particular, the anchor sleeve 15 extends co-axially with respect to the longitudinal axis 99. The anchor sleeve 15 preferably consists of metal, more preferably steel. It can in particular be monolithic.

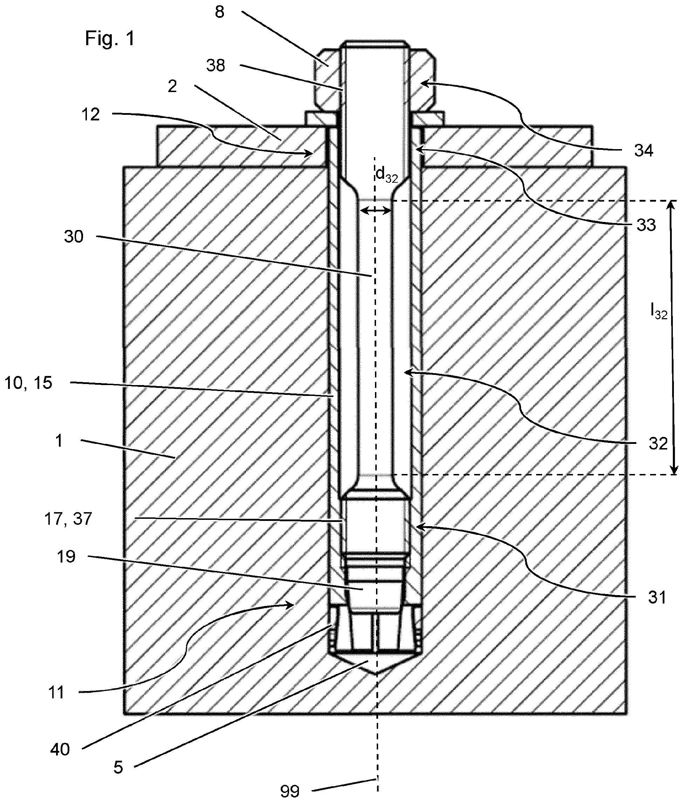

The drop-in anchor 10 further comprises a plug 19. The plug 19 can be driven, axially, into an installed position within the anchor sleeve 15. In this installed position, the plug 19 expands the expandable first end 11 of the anchor sleeve 15. The anchor sleeve 15 has an internal taper which acts as a wedge when the plug 19 is driven into the installed position, thereby radially expanding the anchor sleeve 15 when the plug 19 is driven axially into the installed position. In figure 1, the plug 19 is shown to be positioned in the installed position.

The anchor system furthermore comprises an anchor rod 30, wherein, when installed as intended, the anchor rod 30 extends co-axially with respect to the longitudinal axis 99. When installed as intended, this anchor rod 30 extends into the anchor sleeve 15. The anchor rod 30 consists of metal, preferably of steel. The anchor rod is preferably monolithic. In particular, the anchor rod 30 can be solid, i.e. without cavities.

The anchor rod 30 comprises an anchor rod first end 31 and a first external thread 37 that is provided at the anchor rod first end 31. The anchor sleeve 15 comprises an internal thread 17, which corresponds to the first external thread 37. The internal thread 17 of the anchor sleeve is located, axially, adjacent to the expandable first end 11 of the anchor sleeve 15, and preferably adjoins this expandable first end 11.

As shown in figure 1, the first external thread 37 of the anchor rod 30 threadedly engages the internal thread 17 of the anchor sleeve 15 when the anchor system is installed as intended, with the plug 19 located in the installed position. Preferably, the anchor rod 30 abuts on the plug 19 when the first external thread 37 of the anchor rod 30 is fully tightened within the internal thread 17 of the anchor sleeve 15, as shown in figure 1, thereby axially securing the plug 19.

The anchor rod 30 further comprises an anchor rod shear absorbance region 33, which is, axially, distant from the first external thread 37 of the anchor rod 30 and/or, axially, distant from the anchor rod first end 31. The length of the anchor rod 30 is so dimensioned that the anchor rod shear absorbance region 33 is located, axially, within the anchor sleeve second end 12 of the anchor sleeve 15 when the internal thread 17 of the anchor sleeve 15 threadedly engages the first external thread 37 of the anchor rod 30. In particular, the length of the anchor rod 30 is so dimensioned that the anchor rod shear absorbance region 33 is located, axially, within the anchor sleeve second end 12 of the anchor sleeve 15 when the first external thread 37 of the anchor rod 30 is fully tightened within the internal thread 17 of the anchor sleeve 15 and/or when the anchor rod 30 abuts on the plug 19.

In the anchor rod shear absorbance region 33, the anchor rod 30 has relatively large cross section, and has a relatively tight fit within the anchor sleeve 15, possibly with some play, but only minor. Consequently, the anchor rod provides the anchor sleeve 15 with relatively high shear resistance (with respect to the longitudinal axis 99) at the anchor sleeve second end 12.

In the structure shown in figure 1, the anchor sleeve 15 projects from the substrate 1 into the attachment part 2. In particular, the drop-in anchor 10 is so positioned that both the anchor sleeve second end 12 and the anchor rod shear absorbance region 33 located therein extend both within the substrate 1 and within the attachment part 2, thereby providing particularly good shear resistance when the attachment part 2 is loaded laterally (with respect to the longitudinal axis 99) with respect to the substrate 1.

The anchor rod 30 further comprises an anchor rod yield region 32. This anchor rod yield region 32 is located axially between the anchor rod shear absorbance region 33 and the anchor rod first end 31. In the anchor rod yield region 32, the anchor rod 30 has smaller cross section than the anchor rod 30 has within the anchor rod shear absorbance region 33. Consequently, the anchor rod yield region 32 provides a predetermined yield region at which the anchor rod will preferably yield or even fracture at heigh axial loads.

In the shown embodiment, the anchor rod 30 has, within the anchor rod yield region 32, smaller cross section than the anchor rod 30 has at the anchor rod first end 31, where the first external thread 37 is located. Accordingly, the anchor rod 30 has a dumbbell-like structure that spans the anchor rod shear absorbance region 33, the anchor rod yield region 32, and the anchor rod first end 31.

In the anchor rod yield region 32, the anchor rod 30 has generally circular cylindrical lateral surface. The anchor rod yield region 32 has a length I₃₂, measured parallel to the longitudinal axis 99, and a diameter d₃₂, measured perpendicularly to the longitudinal axis 99. The length I₃₂ is greater or equal than eight times the diameter d₃₂, and in the shown embodiment, this ratio is approximately 8.2.

The anchor rod has an anchor rod second end 34, wherein the anchor rod first end 31 and the anchor rod second end 34 are opposite ends of the anchor rod 30. In the shown structure, the anchor rod second end 34 projects from the attachment part 2. At the anchor rod second end 34, the anchor rod 30 is provided with a second external thread 38. The anchor system furthermore comprises a nut 8, which has a nut internal thread that corresponds to the second external thread 38. In the shown structure, the nut 8 is screwed onto the second external thread 38 of the anchor rod 30, so that the nut 8 secures the attachment part 2 on the substrate 1 (in the shown embodiment, this securement is indirect via a washer, but it can also be direct).

In the present embodiment, the cross sections of the anchor rod 30 at the anchor rod second end 34 and in the anchor rod shear absorbance region 33, respectively, are generally the same, and the second external thread 38 extends from the anchor rod second end 34 into the anchor rod shear absorbance region 33. However, both of these aspects are exemplary only, and differently dimensioned embodiments appear also feasible.

The anchor rod yield region 32 is located adjacent to and axially distant from of the anchor rod first end 31, the anchor rod shear absorbance region 33 is located adjacent to and axially distant from of the anchor rod yield region 32, and the anchor rod second end 34 is located adjacent to and axially distant from the anchor rod shear absorbance region 33. The longitudinal axis extends through the anchor rod first end 31, the anchor rod yield region 32, the anchor rod shear absorbance region 33 and the anchor rod second end 34, when the anchor rod 30 is installed as intended within the structure.

In the shown embodiment, the drop-in anchor 10 comprises an additional expansion sleeve 40, which can be radially expanded by a conical wedge provided on the outside of the anchor sleeve 15, preferably at the expandable first end 11 thereof. However, this is exemplary only, and embodiments without the additional expansion sleeve 40 are also feasible.

When the anchor system is used, a bore 5 is provided within the substrate 1 (which can in particularly be a concrete substrate) and the anchor sleeve 15 of the drop-in anchor 10 is inserted into the bore 5, with the expandable first end 11 of the anchor sleeve 15 leading, until the anchor sleeve 15, in particular the expandable first end 11 thereof, abuts, directly or indirectly, against the bottom of the bore 5. The bore 5 is so dimensioned in its depth that the anchor sleeve second end 12 sticks out of the substrate 1 when the anchor sleeve 15, in particular the expandable first end 11 thereof, abuts, directly or indirectly, against the bottom of the bore 5.

The plug 19 is then axially driven into the expandable first end 11 so as to radially expand the expandable first end 11, thereby anchoring the drop-in anchor 10 within the substrate 1. Subsequently, the anchor rod 30 is inserted into the anchor sleeve 15, with the anchor rod first end 31 leading, and the first external thread 37 is brought into threaded engagement with the internal thread 17, until the anchor rod 30 abuts on the plug 19. The length of the anchor rod 30 is so dimensioned that the anchor rod shear absorbance region 33 will be located within the anchor sleeve second end 12, i.e. with axial overlap thereto, when the anchor rod 30 abuts on the plug 19.

The attachment part 2 is placed adjacent to the substrate 1 and the anchor rod 30 is led through the attachment part 2. In one alternative embodiment, the attachment part 2 is placed adjacent to the substrate 1 before the anchor sleeve 15 is inserted into the bore 5 in the substrate 1, and the anchor sleeve 15 is inserted into the bore 5 in the substrate 1 through the attachment part 2. In another alternative embodiment, the attachment part 2 is placed adjacent to the substrate 1 after the anchor sleeve 15 has been inserted into the bore 5 in the substrate 1.

The nut 8 is threaded onto the second external thread 38 that is provided at the anchor rod second end 34, thereby securing the attachment part 2 on the substrate 1. The resulting structure is shown in figure 1. In particular, the structure is characterized in that the anchor sleeve 15 projects from the substrate 1 into the attachment part 2, such that the anchor sleeve second end 12 is located both within the substrate 1 and within the attachment part 2, and the anchor rod shear absorbance region 33 extends, axially, both within the within the substrate 1 and within the attachment part 2.

## Claims

1. Anchor system comprising a drop-in anchor (10) and an anchor rod (30),
- wherein the anchor rod (30) comprises an anchor rod first end (31), and a first external thread (37) that is provided at the anchor rod first end (31),
- wherein the drop-in anchor (10) comprises an anchor sleeve (15) having an expandable first end (11) and an anchor sleeve second end (12), and wherein the drop-in anchor (10) further comprises a plug (19) that is able to be driven into an installed position within the anchor sleeve (15), in which the plug (19) expands the expandable first end (11), wherein the anchor sleeve (15) further comprises an internal thread (17) for threadedly engaging the first external thread (37) of the anchor rod (30),
**characterized in that**
- the anchor rod (30) further comprises an anchor rod yield region (32) and an anchor rod shear absorbance region (33), wherein the anchor rod yield region (32) is located between the anchor rod shear absorbance region (33) and the anchor rod first end (31), wherein the anchor rod (30) is so dimensioned that the anchor rod shear absorbance region (33) is located within the anchor sleeve second end (12) when the internal thread (17) of the anchor sleeve (15) threadedly engages the first external thread (37) of the anchor rod (30), wherein the anchor rod (30) has, within the anchor rod yield region (32), smaller cross section than it has in the anchor rod shear absorbance region (33).

2. Anchor system according to claim 1,
**characterized in that**
the anchor rod (30) has, within the anchor rod yield region (32), smaller cross section than it has at the anchor rod first end (31).

3. Anchor system according to any of the preceding claims,
**characterized in that**
the anchor rod (30) has, within the anchor rod yield region (32), generally cylindrical, in particular circular cylindrical, lateral surface.

4. Anchor system according to claim 3,
**characterized in that**
the anchor rod yield region (32) has a length (I₃₂) and a diameter (d₃₂), wherein the length (I₃₂) is greater or equal than eight times the diameter (d₃₂).

5. Anchor system according to any of the preceding claims,
**characterized in that**
the anchor rod (30) has an anchor rod second end (34) and a second external thread (38) that is provided at the anchor rod second end (34).

6. Anchor system according to any of the preceding claims,
**characterized in that**
the drop-in anchor (10) comprises an additional expansion sleeve (40), which can be radially expanded by a conical wedge provided on the outside of the anchor sleeve (15).

7. Structure comprising a substrate (1), an anchor system according to any one of the proceeding claims, and an attachment part (2), wherein the expandable first end (11) of the anchor sleeve (15) is embedded in the substrate (1), wherein the anchor sleeve (15) projects from the substrate (1) into the attachment part (2), such that the anchor sleeve second end (12) is located within the attachment part (2), and wherein the anchor rod shear absorbance region (33) extends both within the attachment part (2) and within the substrate (1).

8. Method for installing an anchor system according to any of claims 1 to 5, in which a bore (5) having a bottom is provided in a substrate (1), and the anchor sleeve (15) is inserted into the bore (5) until it abuts on the bottom of the bore (5), wherein the bore (5) is so dimensioned that the anchor sleeve second end (12) projects from the substrate when the anchor sleeve (15) abuts on the bottom of the bore (5).
